# EUROPÄISCHE PATENTSCHRIFT

(11) **EP 1 368 166 B1**
(45) Veröffentlichungstag und Bekanntmachung des Hinweises auf die Patenterteilung: **03.11.2004**
(21) Anmeldenummer: 02727339.0
(22) Anmeldetag: 01.03.2002
(51) Int. Cl.: B27K 3/34, C09D 7/12, C08K 3/10, C08K 5/00

(54) **ADDITIV ZUR VERWENDUNG IN EINER WÄSSRIGEN POLYMERDISPERSION ZUR BEHANDLUNG VON HOLZ UND HOLZPRODUKTEN**
ADDITIVE FOR USE IN AN AQUEOUS POLYMER DISPERSION FOR TREATING WOOD OR WOOD PRODUCTS
ADDITIF POUR UTILISATION DANS UNE DISPERSION POLYMERE AQUEUSE DESTINEE A TRAITER LE BOIS ET LES PRODUITS EN BOIS

(30) Priorität: 02.03.2001 DE 10110160
(43) Veröffentlichungstag der Anmeldung: 10.12.2003
(73) Patentinhaber: BK Giulini Chemie GmbH & Co. OHG, 67065 Ludwigshafen (DE); Goldschmidt AG, 45127 Essen (DE)
(72) Erfinder: STAFFEL, Thomas, 67269 Grünstadt (DE); SCHMITT, Michael, 69124 Heidelberg (DE); HEILEN, Wernfried, 46519 Alpen (DE); HOSCHKE, Markus, 45478 Mülheim (DE)
(86) Internationale Anmeldenummer: PCT/EP2002/002208
(87) Internationale Veröffentlichungsnummer: WO 2002/085589

(56) Entgegenhaltungen:
- EP-A- 0 420 293
- GB-A- 811 426
- US-A- 4 021 398
- US-A- 4 636 548
- US-A- 5 681 880

## Beschreibung

Die vorliegende Erfindung bezieht sich auf die Verwendung eines Additives in einer wässrigen Polymerdispersion, die zur Behandlung von Holz und Holzprodukten eingesetzt wird. Die Behandlung von Holz erfolgt dabei in Form einer Grundierung bzw. Beschichtung und hat vor allem das Ziel, das Austreten von Holzinhaltstoffen zu verhindern.

Viele in der Holzindustrie verwendeten Holzsorten enthalten mehr oder weniger störende Holzinhaltstoffe, die sowohl während der Bearbeitung, als auch beim späteren Gebrauch unerwünscht sind. In erster Linie handelt es sich dabei um die Stoffe Lignin und Tannin, die in größeren. Mengen beispielsweise in Hölzern wie Eiche, Red Cedar, Merbau, enthalten sind. Unter Einwirkung von Feuchtigkeit und vor allem bei erhöhten Temperaturen, aber immer bei der Verarbeitung des Holzes für industrielle oder handwerkliche Zwecke und auch beim späteren Gebrauch des Holzgegenstandes sind diese Stoffe auf der Holzoberfläche als Flecken zu sehen. Um dies zu verhindern muß die Holzoberfläche mit einer Deckbeschichtung und Grundierung behandelt und mit einer Sperrschicht versehen werden.

Fleckenbildung tritt auch auf anderen Untergründen auf, wenn diese aus der Holzverarbeitung stammende Baumaterialien enthalten. Als Beispiele seien Holzfaserplatten und Gipskartonplatten genannt, aus deren Oberfläche ebenfalls tanninähnliche Inhaltsstoffe herausgelöst werden können. Dies macht sich in Form von gelblichen Flecken auf der weißen Gipsoberfläche bemerkbar.

Um diese unerwünschten Erscheinungen zu verhindern, werden vor Aufbringen der Deckbeschichtung zunächst Grundierungen appliziert, die als Sperrschicht wirken. Eingesetzt werden in der Regel Bindemittel, die auf Basis von Polyurethanen oder Epoxidharzen aufgebaut sind und Lösemittel enthalten, so z.B. in der EP 0 420 293. Nachteile dieser Systeme sind die langen Trocknungszeiten, der Lösemittelgehalt und schließlich der zwangsläufig zusätzliche Verarbeitungsschritt durch die vorherige Applikation.

Verbesserungen wurden in den letzten Jahren dadurch erzielt, daß bestimmte Metallverbindungen, die z.B. Chrom-, Wolfram-, Bor-, und Molybdänionen enthalten, den Farben oder auch den Bindemitteln zu gemischt wurden. Die hier eingesetzten Metallverbindungen sind jedoch toxikologisch bedenklich. In der US -A 3 847 857 wird eine solche Klasse von Metallverbindungen beschrieben.

In der EP 709 441 B 1 wird eine wässerige Dispersion, die ein Zirkoniumsalz enthält, für diesen Zweck offenbart. Gemäß Anspruch 5 enthält diese Dispersion zu 97 bis 70 Gew. % ein Emulsionspolymerisat und die wasserlösliche Zirkoniumverbindung in Mengen von 0,2 bis 20 Gew. % (berechnet als ZrO₂), bezogen auf die Dispersion. Diese Zirkoniumverbindungen müssen jedoch wegen ihres niedrigen pH-Wertes mit einer Ammoniumverbindung stabilisiert werden, damit sie sich mit den anderen Bestandteilen der Dispersion verträglich zeigen.

Es bestand also weiterhin die Aufgabe, besser verträgliche Zusätze zu finden, die üblichen Dispersionen zur Grundierung oder Beschichtung zugefügt werden können, die mit den Bestandteilen dieser Dispersionen verträglich und chemisch stabil sind.

Die Lösung dieser Aufgabe wurde durch die Verwendung von wasserlöslichen . Titanverbindungen gemäß den Ansprüchen 1 und 2 gelöst.

Danach ist das erfindungsgemäße Additiv eine wasserlösliche Titanverbindung. Als wasserlösliche Titanverbindungen kommen die komplexen Titanchelate mit einer organischen alpha-Hydroxycarbonsäure als Ligand, z.B. die Milchsäure in Betracht. Besonders bevorzugt wird als Titanverbindung, ein Titanlactat eingesetzt, das die chemische Bezeichnung Titanate (2) dihydroxybis [2-hydroxypropanato (2-)-diammonium hat. Diese Titanverbindung wird zu der wässrigen Kunststoffdispersion, die als Coating oder Beschichtung für Holzoberflächen und andere, zum Ausbluten neigenden Untergründe verwendet wird, zugesetzt. Die Titanverbindung kann als wässrige Lösung direkt in Kunststoffdispersionen oder in die darauf basierenden Systeme dosiert werden.

Die bevorzugte Einsatzmenge an der Titanverbindung beträgt dabei für Grundierungen vorzugsweise 0,2 bis 20 Gew.-%, insbesondere 0,5 bis 10 Gew.-%, besonders bevorzugt 1 bis 5 Gew - %, gerechnet als Titanoxid TiO₂ und auf die wässerige Kunststoffdispersion bezogen.

Das erfindungsgemäße Additiv weist folgende Vorteile auf :
- Die Titanverbindung hat einen neutralen pH-Weit
- Die Titanverbindung bildet in der Dispersion eine dünne Titandioxid Schicht.
- Titandioxid ist jedoch gleichzeitig als Weißpigment bekannt und trägt damit besonders zur optischen Aufhellung des damit aufgetragenen Anstriches bei.
- Das erfindungsgemäße Additiv ist wasserlöslich.
- Es wird in Form einer wässerigen Lösung eingesetzt und benötigt keine organischen Lösemittel.
- Aufgrund des neutralen pH-Wertes der Titanverbindung ist diese mit den üblicherweise in einer Dispersionsfarbe enthaltenen Bestandteilen verträglich. Keine Ausflockung oder Entmischung beeinträchtigt die guten Gebrauchseigenschaften der damit hergestellten Kunststoffdispersionen.

Die folgenden Tabellen und Beispiele beleuchten die Erfindung näher, ohne sie einzuschränken:

### Prüfformulierungen

Die Versuche wurden auf Basis folgender Bindemittel durchgeführt:
- Acronal S 726: eine Styrol - Acrylat- Dispersion
- Mowilith LDM 6150 (48 % FK): weichmacherfreie wässrige Dispersion auf Basis Acrylsäureester und Styrol

### Formulierung der Prüfbeschichtungen

Zunächst wurden die zwei Bindemittel in zwei verschiedenen Formulierungen ohne der erfindungsgemäßen Dispersion geprüft.

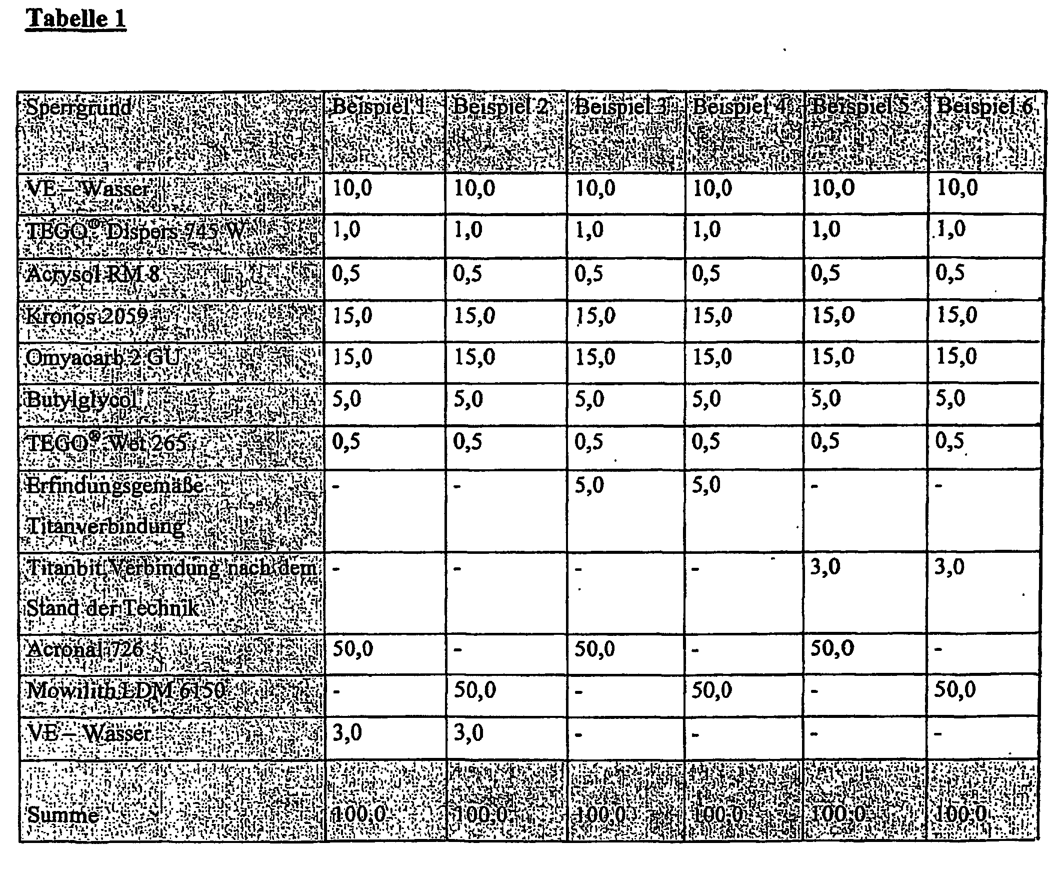

Die in den Tabellen verwendeten Produktbezeichnungen werden in Form einer Legende dieser Beschreibung beigefügt.

### Applikation und Prüfung der Formulierungen

Die fertigen Beschichtungsstoffe wurden mit einer Naßschichtdicke von ca. 100 g/m² mittels einer Hochdruckspritzpistole auf die Prüfplatten aufgetragen. So wurde vermieden, daß die Beschichtungsstoffe hinsichtlich der nicht optimierten Entgasung etc. Applikationsfehler aufwiesen.
Die Trocknung erfolgte zunächst 30 Minuten bei Raumtemperatur und anschließend für 60 Minuten bei 40 °C.
Die Bretter wurden ein- und zweischichtig mit der Grundierung versehen. Der Decklack (Weiß seidenglänzend) wurde anschließend über das gesamte Brett lackiert. Hier erfolgte der Auftrag mittels Hochdruck-Spritzpistole. Die Auftragsmenge betrug hier ebenfalls ca. 100 g/m².

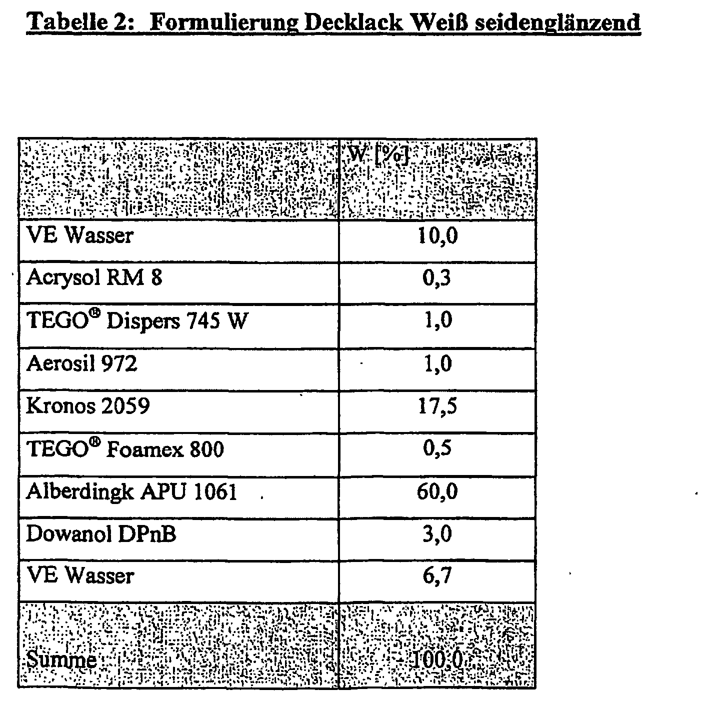

### Beschichtungsaufbau

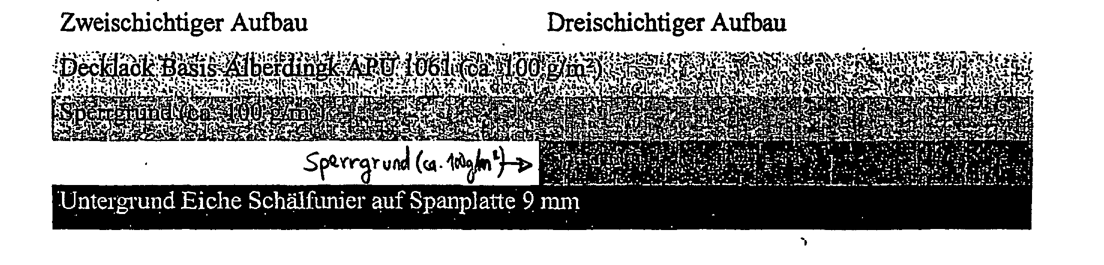

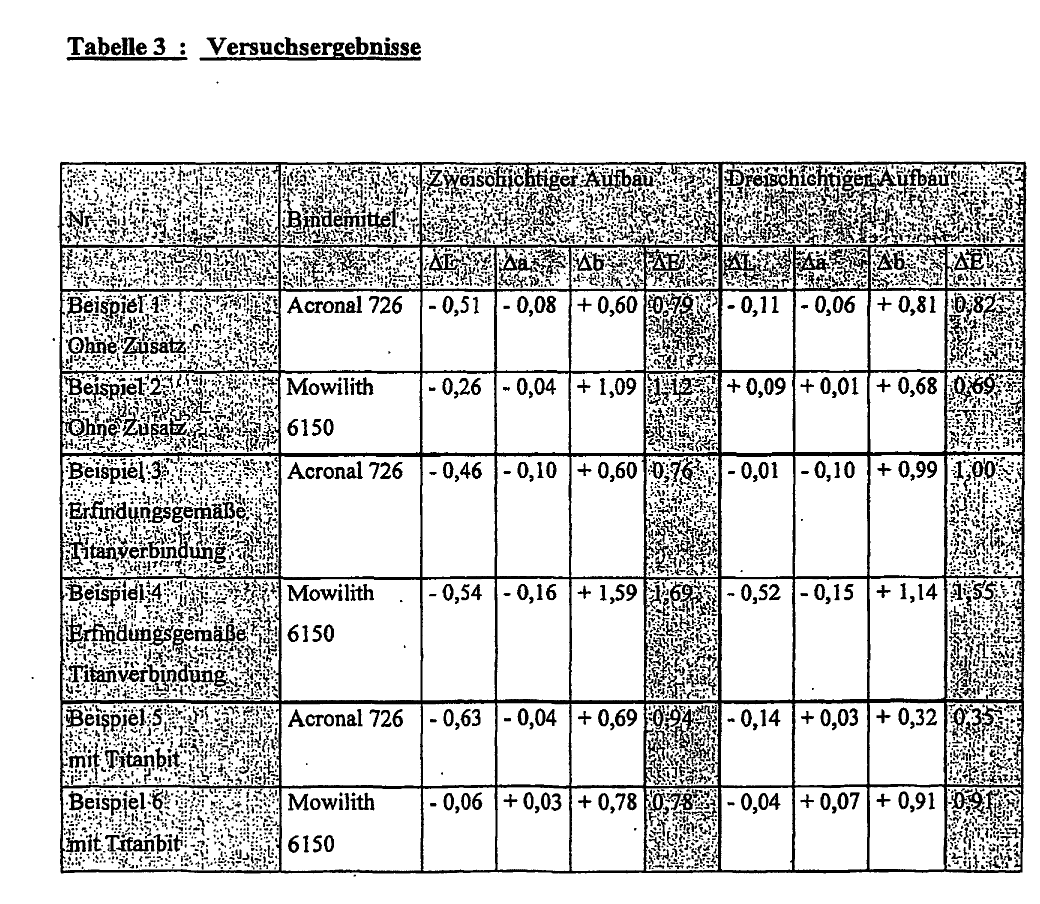

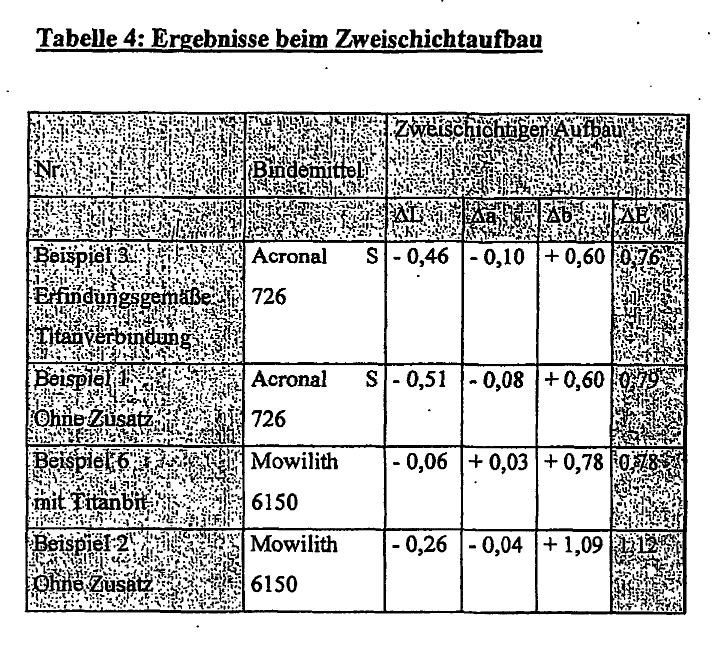

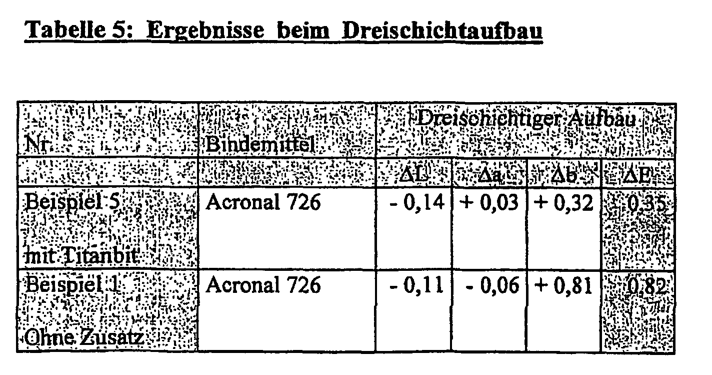

### Versuchsergebnisse

Die besten Ergebnisse wurden mit den beiden Produkten, der erfindungsgemäßen Titanverbindung und Titanbit erzielt. Die Veränderungen im Gesamtfarbton (ΔE - Werte) Die in den Versuchen eingesetzten Produkte, die mit ihren Markennamen genannt sind, sind im einzelnen:

| | |
|---|---|
| 1. TEGO Dispers 745 W | Dispergiermittel auf Basis eines mod. Polyacrylates mit pigmentaffinen Gruppen |
| 2. Acrylsol RM 8 | Verdickungsmittel auf Polyurethanbasis |
| 3. Kronos 2059 | TiO₂ Pigment |
| 4. Omyacarb2 GU | gefälltes Calciumcarbonat |
| 5. TEGO Wet 265 | Substratnetzmittel |
| 6. Acronal S 726 | Styrol - Acrylatdispersion |
| 7. Mowilith LDM 6150 | weichmacherfreie wässerige Dispersion auf Basis Acrylsäureester und Styrol |
| 8. Aerosil 972 | pyrogene Kieselsäure |
| 9. TEGO Foamex 800 | Entschäumer |
| 10. Alberdingk APU 1061 | Urethan - Acrylatpolymer |
| 11. Dowanol DPnB | Filmbildehilismittel |
| 12 Titanbit | Ammoniumtitanylsulfat |

## Patentansprüche

1. Verwendung einer wässrigen Titanchelatverbindung als Additiv in wässrigen Polymerdispersionen für die Behandlung von Holz und Holzprodukten.

2. Verwendung nach Anspruch 1, **dadurch gekennzeichnet, daß** als wässrige Titanchelatverbindung ein Titanlactat, nämlich Titanate (2)-dihydroxybis-[2-hydroxypropanato-(2-)-diammonium in Mengen von 0,2 bis 20 Gew.-%, bevorzugt 0,5 bis 10 Gew.-%, besonders bevorzugt 1 bis 5 Gew.-%, gerechnet als Titanoxid TiO₂ und bezogen auf die wässerige Polymerdispersion, eingesetzt wird.

## Revendications

1. Utilisation d'un complexe aqueux de chélate de titane comme additif dans des dispersions polymères aqueuses pour le traitement du bois et des produits de bois.

2. Utilisation d'après la revendication 1, **caractérisée par le fait qu'**un lactate de titane est utilisé comme complexe aqueux de chélate de titane, à savoir du titanate (2)-dihydroxybis-(2-hydroxypropanato-(2-)-diammonium en quantités de 0,2 à 20 % en poids, préférentiellement 0,5 à 10 % en poids, plus préférentiellement 1 à 5 % en poids, calculé comme oxyde de titane TiO₂ et relatif à la dispersion polymère aqueuse.

## Claims

1. Use of an aqueous titanium chelate combination as an additive in aqueous polymer dispersions for the treatment of wood and wood products.

2. Use in accordance with Claim 1, **characterized by** the fact that a titanium lactate is used as an aqueous titanium chelate combination, namely titanate (2)-dihydroxbis-2-hydroxproponate-(2)-dominium in quantities from 0.2 to 20 weight %, preferably 0.5 to 10 weight % particularly preferred to 5 weight %, calculated as TIO₂ and based on the aqueous polymer dispersion.
